# EUROPÄISCHE PATENTSCHRIFT

(11) **EP 2 641 059 B1**
(45) Veröffentlichungstag und Bekanntmachung des Hinweises auf die Patenterteilung: **15.04.2015**
(21) Anmeldenummer: 11785341.6
(22) Anmeldetag: 14.11.2011
(51) Int. Cl.: G01C 21/36, G01C 21/34

(54) **VERFAHREN ZUR ERMITTLUNG EINER RESTREICHWEITE**
METHOD FOR DETERMINING A REMAINING RANGE
PROCÉDÉ DE DÉTERMINATION D'UNE AUTONOMIE RESTANTE

(30) Priorität: 19.11.2010 DE 102010051714; 19.11.2010 DE 102010051713; 15.06.2011 DE 102011104258
(43) Veröffentlichungstag der Anmeldung: 25.09.2013
(73) Patentinhaber: Audi AG, 85045 Ingolstadt (DE)
(72) Erfinder: LANGE, Rainer, 85049 Ingolstadt (DE)
(74) Vertreter: Brandt, Kai
(86) Internationale Anmeldenummer: PCT/EP2011/005717
(87) Internationale Veröffentlichungsnummer: WO 2012/065709

(56) Entgegenhaltungen:
- EP-A1- 2 172 740
- DE-A1-102008 037 262
- US-A- 5 539 399

## Beschreibung

Die Erfindung betrifft ein Verfahren zur Ermittlung einer die Restreichweite eines Kraftfahrzeugs, umfassend ein Energiespeichersystem zur Versorgung eines auf wenigstens ein Rad des Kraftfahrzeugs, wirkenden Antriebs, beschreibenden Teilfläche einer durch Merkmale beschriebenen Karte, wobei die Restreichweite in Abhängigkeit einer in dem Energiespeichersystem gespeicherten Energie durch einen von der aktuellen Position des Kraftfahrzeugs ausgehend expandierenden Algorithmus ermittelt wird, sowie ein zugehöriges Kraftfahrzeug.

Kraftfahrzeuge mit Energiespeichersystemen für ihre Antriebe haben zum einen eine Restreichweite, die von der aktuell im Energiespeichersystem gespeicherten Energie abhängig ist, und weisen zum anderen einen Verbrauch auf, wenn sie eine gewisse Strecke zurücklegen. Daher wurden, insbesondere für Kraftfahrzeuge mit Navigationssystemen, Verfahren vorgeschlagen, um die Restreichweite eines Kraftfahrzeugs zu ermitteln und mit Hilfe des Navigationssystems einem Fahrer zur Kenntnis zu bringen. Beispielsweise kann eine Reichweite anhand einer aus maximal erreichbaren Punkten ermittelten Fläche einer Kartendarstellung eines Navigationssystems überlagert dargestellt werden. Dabei können mit der aktuell gespeicherten Energie noch erreichbare Bereiche, die ohne Rückkehr erreicht werden können, in einer Farbe gekennzeichnet werden, weitere Bereiche, die mit Rückkehr zum derzeitigen Standort erreicht werden können, in einer anderen Farbe (bildliche Vorstellung einer "Spiegelei"-Form bei der "gelb = Rückkehr" und "weiß = erreichbar" bedeuten würde). Ein derartiges Vorgehen ist beispielsweise aus der DE 10 2008 037 262 A1 bekannt.

Um die Restreichweite eines Kraftfahrzeugs zu ermitteln wurde vorgeschlagen, Algorithmen zu verwenden, die auch zur Ermittlung zu befahrender Strecken zu einem Zielpunkt in einem Navigationssystem eingesetzt werden. Dabei wird meist der sogenannte Dijkstra-Algorithmus oder ein Derivat des Dijkstra-Algorithmus verwendet. Der Dijkstra-Algorithmus basiert darauf, sich letztlich von Abzweigemöglichkeit zu Abzweigemöglichkeit ausgehend von der Startposition bzw. aktuellen Position durch die Kartendaten zu bewegen, wobei anhand einer Kostenfunktion, häufig der schnellsten Durchfahrzeit, ein optimaler Weg zu einem Zielpunkt bestimmt werden kann. Dijkstra-Algorithmen, die sich letztlich durch das Kartenmaterial hindurchtasten bzw. von einer Startposition expandieren, sind auch für die Restreichweitenberechnung geeignet, wenn die Kostenfunktion auf der verbrauchten Energie für den Streckenabschnitt als Kosten basiert. Bei der Ermittlung der Restreichweite existiert jedoch kein spezieller Zielpunkt, da in alle Richtungen fortgeschritten werden muss und abgebrochen wird, wenn die entlang der Strecke verbrauchte Energie der aktuell im Energiespeichersystem gespeicherten Energie entspricht oder diese überschreitet. Das bedeutet, es ist eine enorme Rechenzeit und ein sehr großer Berechnungsaufwand erforderlich, um eine Restreichweite bzw. gerade noch erreichbare Punkte zu bestimmen.

Hierzu kommt, dass der Dijkstra-Algorithmus zur Restreichweitenberechnung zumindest bei größeren Restreichweiten recht ungenau ist, nachdem der tatsächliche Verbrauch zusätzlich vom Fahrstil, den Umgebungsbedingungen, dem Verkehr und dergleichen abhängt. Die Ungenauigkeit des Dijkstra-Algorithmus nimmt letztlich mindestens quadratisch mit der noch vorhandenen Energie zu, so dass mit einer größeren Unsicherheit zu rechnen ist.

Es wurde vorgeschlagen, im Rahmen des Dijkstra-Algorithmus nur größere Straßen, beispielsweise Autobahnen und gegebenenfalls noch Bundesstraßen, zu berücksichtigen, jedoch erhält man dann als maximal erreichbare Punkte nur dort Punkte, wo auch dieser Straßentyp vorliegt. Straßen niedriger Kategorie, die von diesen Autobahnen wegführen und potentiell erreichbar wären, werden in der Anzeige dann möglicherweise als unerreichbar dargestellt.

Ein alternativer Algorithmus wird in der nachveröffentlichten Patentanmeldung DE 10 2010 051 546.9-53 vorgeschlagen, worin statt der Kartendaten des Dijkstra-Algorithmus vorgeschlagen wird, diesen auf Flächensegmenten zu basieren, denen jeweils Energiekosten, gegebenenfalls richtungsabhängig, zugeordnet sind, die benötigt werden, um das jeweilige Flächensegment zu durchqueren. Solche Flächensegmente können beispielsweise relativ groß gewählt werden, etwa in einer Größe von 2 km * 2 km. Durch ein "Ablaufen" der Flächensegmente ergibt sich mithin in der Summe ein Verbrauch, den das Kraftfahrzeug auf dem abgelaufenen Weg hat. Die Berechnung kann dabei analog zum Dijkstra-Algorithmus erfolgen, wobei letztlich von einem ersten Flächensegment, in dem sich das Kraftfahrzeug beispielsweise aktuell aufhält, zu einem zweiten Flächensegment expandiert wird, das an das erste Flächensegment angrenzt und dem von allen an das erste Flächensegment angrenzenden Flächensegmenten die geringsten Energiekosten zugeordnet sind. Im nächsten Schritt wird dann vom ersten und zweiten Flächensegment zu einem dritten Flächensegment expandiert, das an das erste Flächensegment angrenzt und dem von allen an das erste Flächensegment angrenzenden Flächensegmenten die nach dem zweiten Flächensegment geringsten Energiekosten zugeordnet sind, oder das an das zweite Flächensegment angrenzt, wenn dem ersten, zweiten und dritten Flächensegment in Summe geringere Energiekosten zugeordnet sind als dem ersten Flächensegment und dem Flächensegment in Summe zugeordnet sind, dem von allen an das erste Flächensegment angrenzenden Flächensegmenten die nach dem zweiten Flächensegment geringsten Energiekosten zugeordnet sind. Dieses Verfahren wird iterativ für die nächsten Flächensegmente fortgesetzt. Alternativ oder ergänzend können die Flächensegmente zur Reichweitenberechnung sternförmig und/oder rekursiv expandiert werden. Die Reichweitenberechnung auf einem Expansionsweg kann abgebrochen werden, wenn die Summe der Energiekosten der Flächensegmente eine vorgegebene Energiemenge erreicht oder übersteigt, insbesondere die aktuell in dem Energiespeichersystem eingespeicherte Energiemenge. Dieser Algorithmus lässt sich mit einem deutlich geringeren Berechnungsaufwand durchführen als der auf dem Straßennetz basierende Dijkstra-Algorithmus, so dass Ressourcen und Zeit eingespart werden können. Zwar ist der Algorithmus heuristischer als der Dijkstra-Algorithmus, jedoch ist dies insbesondere bei großen Reichweiten weniger relevant, nachdem die durch den Algorithmus nicht erfassbaren Einflüsse, die oben bereits diskutiert wurden, ohnehin eine gewisse Ungenauigkeit bedingen.

Das Ergebnis der bekannten Algorithmen ist letztlich eine Punktewolke an maximal noch erreichbaren Punkten bzw. Flächensegmenten, die gespeichert werden, wenn die noch vorhandene Restenergie aufgebraucht ist. Die Punkte dieser Punktewolke werden dann, beispielsweise durch einen Polygonzug, zu einer Fläche verbunden und es wird davon ausgegangen, dass die sich ergebenden Teilfläche der Teilkarte die erreichbaren Bereiche anzeigt. Bei dieser Vorgehensweise treten jedoch deutliche Fehler in der resultierenden Teilfläche auf. In von der Anmelderin durchgeführten Versuchen traten Fehler von bis zu 30 - 40 %, in Sonderfällen auch mehr, auf, das bedeutet, 30 - 40 % der angezeigten Restreichweite sind in Wahrheit nicht mehr erreichbar oder 30 - 40 % der als nicht erreichbar angezeigten Bereiche sind erreichbar. Diese Effekte treten insbesondere dann auf, wenn gewisse Bereiche verkehrstechnisch nicht erschlossen sind. Befindet man sich beispielsweise an der Ecke einer Insel, kann es sein, dass es in gewissen Bereichen um die aktuelle Position des Kraftfahrzeugs herum keine ermittelten erreichbaren Endpunkte gibt, nachdem dort schlichtweg nur das Meer, nicht aber Straßen existieren. Enden kleine Straßen z. B. an der Küste, ohne dass die Restenergie gleich Null ist, so werden an diesen Stellen keine Endpunkte gesetzt. Damit werden diese Straßen als potentiell unerreichbar dargestellt (was falsch ist). Berechnet man nun aus den Endpunkten die Teilfläche, beispielsweise als Ergebnis einer Hüllberechnung, beispielsweise einer konvexen Hülle, um die Dijkstra-Endpunkte, werden eigentlich erreichbare Gebiete ausgeschlossen. Jedoch führen auch andere Effekte zu Fehlern.

Der Erfindung liegt daher die Aufgabe zugrunde, ein verlässlicheres Verfahren zur Ermittlung einer die Restreichweite anzeigenden Teilfläche einer Karte anzugeben.

Zur Lösung dieser Aufgabe ist bei einem Verfahren der eingangs genannten Art erfindungsgemäß vorgesehen, dass eine in gleichgroße, insbesondere rechteckige geometrische Strukturen aufgeteilte Karte verwendet wird, wobei immer dann, wenn im Rahmen der Expansion ein in einer Struktur liegendes oder einer Struktur entsprechendes Merkmal hinzugefügt wird, die Struktur zu der Teilfläche hinzugefügt wird.

Es wird mithin vorgeschlagen, die Teilfläche in ihrer Grundform bereits während der Durchführung des Wegfindungsalgorithmus zu den maximal erreichbaren Endpunkten zu ermitteln. Die Karte wird mithin mit geometrischen Strukturen überlagert, insbesondere Rechtecken, wobei während der Expansion im Verlauf des Algorithmusses geometrische Strukturen, in denen Merkmale liegen, die einen Teil der gerade betrachteten Fahrstrecke bilden, als "besucht" markiert werden. Den geometrischen Strukturen wird also letztlich eine Art "flag" zugeordnet, das anzeigt, ob bei der Expansion ausgehend von der aktuellen Position diese geometrische Struktur besucht wurde. Die sich ergebende Teilfläche ist dann ein Gebilde aus zusammenhängenden geometrischen Strukturen, insbesondere zusammenhängenden Rechtecken, dass die mögliche Restreichweite mit beliebig hoher Genauigkeit, abhängig von der Größe der geometrischen Strukturen darstellt. Beispielsweise können hier als geometrische Strukturen Rechtecke der Größe 1 km * 1 km oder größer, insbesondere 2 km * 2 km, herangezogen werden.

Bei der vorliegenden Erfindung ist es mithin zur Bestimmung der Teilfläche letztlich irrelevant, ob tatsächlich ein Endpunkt erreicht wird, bei dem die im Energiespeichersystem gespeicherte Energie vollständig aufgebraucht wird, nachdem auch bei betrachteten Wegen, die in einer nicht weiterführbaren Sackgasse oder der dergleichen enden, die entsprechenden geometrischen Strukturen als zu der Teilfläche gehörend markiert werden können. Insgesamt ergibt sich also nicht nur eine höhere Genauigkeit bei der Berechnung der Rechtreichweiten-Teilfläche, sondern es entfallen auch degenerative Sonderfälle, beispielsweise auf Inseln oder auf sonstigen Fällen, in denen bestimmte Bereiche nur bis zu einer bestimmten Reichweite zugänglich sind.

Dabei kann vorgesehen sein, dass als Algorithmus ein Dijkstra-Algorithmus oder ein davon abgeleiteter Algorithmus zur Wegfindung verwendet wird, wobei bei der Kostenfunktion Energiewerte betrachtet werden. Bei diesen Algorithmen gibt es verschiedene Möglichkeiten der Expansion, etwa eine sternförmige oder rekursive Expansion, jedoch auch komplexere Vorgehensweisen. Alle diese Vorgehensweisen haben gemein, dass schrittweise ein Weg aufgefunden wird, der mit der verbleibenden Restenergie zurückgelegt werden kann. Nachdem dies schrittweise erfolgt, ist eine Markierung der geometrischen Strukturen als zur Teilfläche gehörig problemlos möglich.

In bevorzugter Ausgestaltung der vorliegenden Erfindung wird als Algorithmus einem Flächensegment Energiewerte zuordnender, im Rahmen der Expansion die Flächensegmente betrachtender Algorithmus verwendet Hierzu ist beispielsweise auf die bereits diskutierte, nachveröffentlichte Anmeldung DE 10 2010 051 546.9-53 zu verweisen. In einer besonders vorteilhaften Ausführungsform kann vorgesehen sein, dass die geometrischen Strukturen den Flächensegmenten entsprechen. Nachdem die Expansion des Algorithmus dann ohnehin über die Flächensegmente abläuft, kann einfach jedes "betretene" Flächensegment direkt als gesuchte geometrische Struktur und somit Teil der Teilfläche markiert werden. Dadurch ergibt sich eine besonders vorteilhafte Ausführungsform des erfindungsgemäßen Verfahrens, die nicht nur die Verwendung eines einen geringen Berechnungsaufwand aufweisenden Algorithmus erlaubt, sondern zusätzlich auch eine genauere und weniger fehleranfällige Ermittlung der Teilfläche in einer besonders einfachen Realisierung erlaubt.

In weiterer Ausgestaltung des Verfahrens kann vorgesehen sein, dass der Rand der Teilfläche geglättet wird und/oder von der Teilfläche umschlossene, nicht zu der Teilfläche gehörende Bereiche der Teilfläche hinzugefügt werden. Beide Varianten dienen letztlich der Verbesserung einer folgenden Darstellung der Teilfläche, nachdem ein glatterer Rand ein angenehmeres Bild bei Betrachtung beispielsweise durch den Fahrer des Kraftfahrzeugs liefert. Um eine geschlossene Teilfläche zu erzeugen, kann zudem vorgesehen sein, dass von der Teilfläche umschlossene, nicht zu der Teilfläche gehörende Bereiche der Teilfläche hinzugefügt werden. Solche Bereiche können entstehen, wenn beispielsweise Gebiete nicht durch Verkehrswege zugänglich sind, beispielsweise im Fall von Gebirgen, Seen und dergleichen. Um ein einheitliches Bild zu bieten können diese Bereiche der Teilfläche hinzugefügt werden.

Es kann ferner vorgesehen sein, wie bereits erwähnt, dass die Teilfläche gemeinsam mit der Karte unterscheidbar von nicht der Teilfläche zugehörigen Bereichen der Karte auf einer Anzeigevorrichtung des Kraftfahrzeugs dargestellt wird. Beispielsweise können erreichbare Bereiche farblich unterschiedlich von nicht erreichbaren Bereichen dargestellt werden, beispielsweise, indem eine zu der Teilfläche gehörende geometrische Struktur anders eingefärbt wird als eine nicht zu der Teilfläche gehörende geometrische Struktur. Möglich ist es selbstverständlich auch, die Begrenzung der Teilfläche, gegebenenfalls geglättet, zu betrachten, um die Darstellung zu erzeugen.

Ferner kann vorgesehen sein, dass als das Energiespeichersystem ein einen Kraftstofftank und/oder eine Batterie aufweisendes Energiespeichersystem verwendet wird. Das erfindungsgemäße Verfahren lässt sich also sowohl für reine Elektrokraftfahrzeuge oder nur über einen Verbrennungsmotor betreibbare Kraftfahrzeuge als auch für Hybridfahrzeuge vorteilhaft einsetzen

Neben dem Verfahren betrifft die Erfindung auch ein Kraftfahrzeug mit einem auf wenigstens ein Rad des Kraftfahrzeugs wirkenden Antrieb, einem Energiespeichersystem zur Versorgung des Antriebs und einer zur Durchführung des erfindungsgemäßen Verfahrens ausgebildeten Berechnungsvorrichtung. Sämtliche Ausführungen bezüglich des erfindungsgemäßen Verfahrens lassen sich analog auf das erfindungsgemäße Kraftfahrzeuge übertragen, so dass auch mit diesem die Vorteile der vorliegenden Erfindung erreicht werden können, insbesondere lässt sich eine verlässlichere und genauere Anzeige der Restreichweite in Form der Teilfläche der Karte.

Dabei kann weiterhin vorgesehen sein, dass die Berechnungsvorrichtung Teil eines Navigationssystems ist. Navigationssysteme weisen meist ohnehin Algorithmen zur Wegfindung auf, so dass gegebenenfalls Komponenten einer Routenberechnung auch für die Restreichweitenberechnung eingesetzt werden können und dergleichen. Zudem ist die Restreichweitenberechnung in ihrer Funktionalität am ehestens einem Navigationssystem zuzuordnen, so dass auch eine Realisierung der Funktion in einem Navigationssystem vorteilhaft ist.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: eine Skizze zur Durchführung des erfindungsgemäßen Verfahrens, und
- Fig. 3: eine Prinzipskizze einer möglichen Darstellung der Teilfläche mit einer Karte.

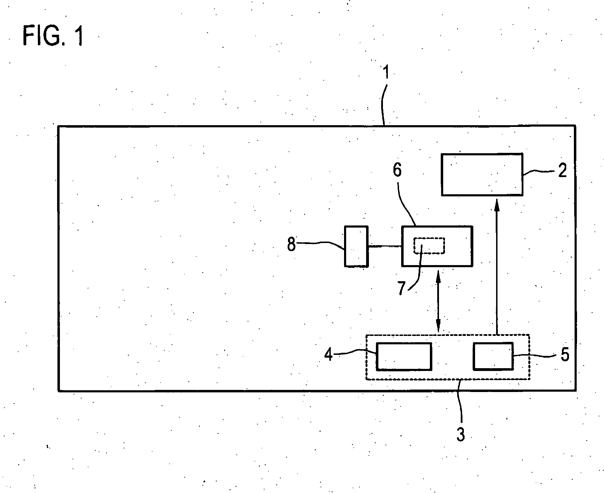

Fig. 1 zeigt eine Prinzipskizze eines erfindungsgemäßen Kraftfahrzeugs 1. Im Ausführungsbeispiel handelt es sich um ein Hybridfahrzeug, das bedeutet, das dem Antrieb 2 zugeordnete Energiespeichersystem 3 umfasst sowohl einen Kraftstofftank 4 als auch eine Batterie 5. Daten über die aktuell in dem Energiespeichersystem 3 vorhandene Restenergie werden an ein Navigationssystem 6 weitergeleitet, welches eine Berechnungsvorrichtung 7 umfasst. Diese ist zur Durchführung des erfindungsgemäßen Verfahrens ausgebildet, das bedeutet, die Restreichweite wird unter Verwendung eines von der aktuellen Position des Kraftfahrzeugs 1 ausgehenden, expandierenden Algorithmus berechnet, wobei im Laufe der Expansion besuchte geometrische Strukturen, hier Rechtecke, die durch die Aufteilung der betrachteten Karte entstanden sind, einer Teilfläche zugeordnet werden, die die Restreichweite in der Karte beschreibt, was im Folgenden noch näher dargestellt werden soll.

Das Navigationssystem 6 ist ferner mit einer Anzeigevorrichtung 8 verbunden, auf der die die Restreichweite beschreibende Teilfläche gemeinsam mit der Karte, insbesondere dieser überlagert, angezeigt werden kann.

Wie bereits erwähnt, basiert das erfindungsgemäße Verfahren letztlich auf einem an dem Energieverbrauch auf einem Wegabschnitt orientierten Wegfindungsalgorithmus, wobei die Wegabschnitte mit der Karte wenigstens in Zusammenhang stehen. Dabei sind klassische Dijkstra-Algorithmen denkbar, die sich unmittelbar an vorhandenen Verkehrswegen orientieren, deren Abschnitte sich mithin zwangsläufig innerhalb einer oder mehrerer geometrischer Strukturen der Karte befinden. Daher ist die Zuordnung hier einfach möglich. Es wird jedoch bevorzugt, wozu auch das konkrete Ausführungsbeispiel beschrieben werden soll, einen Algorithmus der in der deutschen Patentanmeldung DE 10 2010 051 546.9-53 beschriebenen Art einzusetzen, bei dem Flächensegmenten zugeordnete Energiekosten verwendet werden. Diese Flächensegmente entsprechen im hier dargestellten Ausführungsbeispiel vorteilhaft den geometrischen Strukturen, das bedeutet, die Karte wird in gleichgroße Flächensegmente zerlegt, denen jeweils Energiekosten zugeordnet sind, die benötigt werden, um das Segment zu durchqueren, wobei diese Energiekosten auch richtungsabhangig sein können. Die Flächensegmente können dabei beispielsweise 1 km * 1 km oder 2 km * 2 km groß sein. Ausgehend von dem Flächensegment, in dem sich die aktuelle Position des Kraftfahrzeugs befindet, wird nun im Rahmen einer Expansion eine Wegfindung gestartet, die letztlich verschiedene Wege liefert, auf denen das Kraftfahrzeug mit der verbleibenden Restenergie einen Endpunkt erreicht. Jedes dieser Flächensegmente wird als geometrische Struktur, sobald es von dem Wegfindungsalgorithmus durchquert wird, während die Restenergie noch nicht aufgebraucht ist, der Teilfläche hinzugefügt, die letztlich die Reichweite des Kraftfahrzeugs beschreibt.

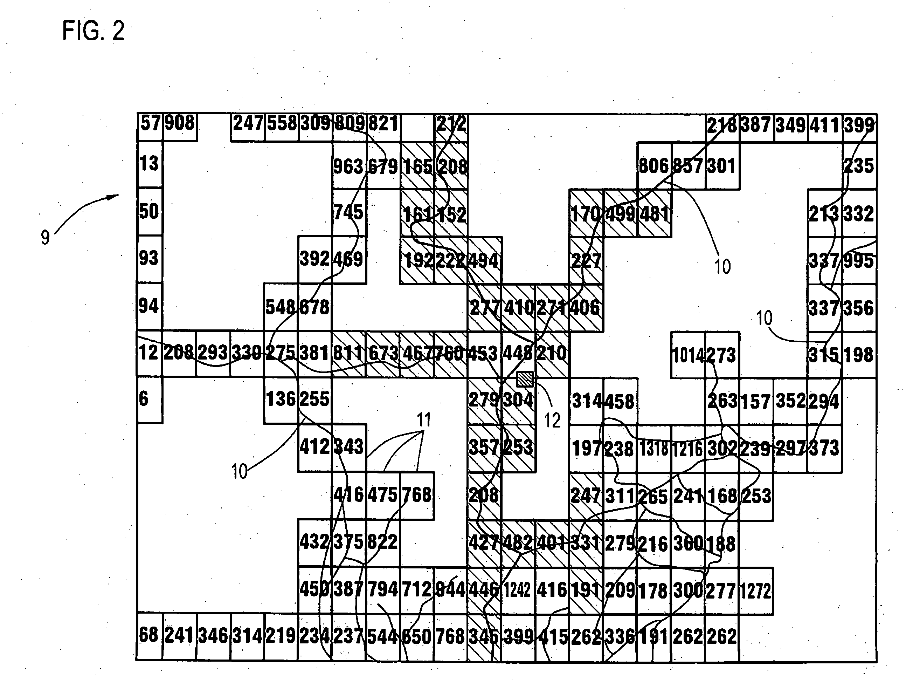

Dies sei anhand der Darstellung in Fig. 2 näher erläutert. Dort ist ein Ausschnitt 9 der Karte gezeigt, auf dem wie grundsätzlich bekannt verschiedene Straßen 10 zu erkennen sind. Diese Straßen verlaufen durch rechteckige Flächensegmente 11, die auch den geometrischen Strukturen entsprechen. Jedem der Flächensegmente 11 ist, durch die im Flächensegment 11 gezeigte Zahl dargestellt, ein Wert für die Energiekosten zugeordnet, die benötigt werden, um das Segment zu durchqueren. Die aktuelle Position des Kraftfahrzeugs 1 wird durch das Quadrat 12 gekennzeichnet.

Ausgehend von diesem Flächensegment läuft der Wegfindungsalgorithmus nun schrittweise solange zu angrenzenden Flächensegmenten 11 weiter, bis die Restenergie aufgebraucht ist. Dabei werden besuchte Flächensegmente, hier schraffiert dargestellt, als ein Teil der Teilfläche markiert. So ergibt sich eine zusammenhängende Menge markierter Flächensegmente, die nach Abschluss der Berechnungen des Algorithmus genau wiedergibt, welche Bereiche der Karte mit der vorhandenen Restenergie erreicht werden können.

Die so ermittelte Teilfläche kann dann noch zur besseren Darstellung nachbearbeitet werden, insbesondere, indem eine geglättete Begrenzung der Teilfläche aufgesucht wird und/oder von der Teilfläche umschlossene Bereiche der Karte zu der Teilfläche hinzugefügt werden, um ein vollständiges und angenehmes Erscheinungsbild auch bei nicht durch Verkehrswege erschlossenen Bereichen und dergleichen zu ermöglichen.

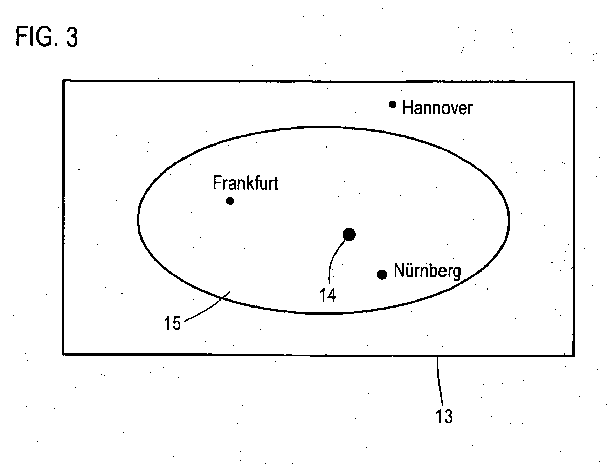

Sodann wird die Karte auf der Anzeigevorrichtung 8 mit der Teilfläche dargestellt, was durch Fig. 3 als Prinzipskizze näher erläutert wird:

Auf der Karte 13 ist die aktuelle Position 14 neben den üblichen Karteninformationen, beispielsweise der Lage von Städten, dargestellt. Innerhalb der Teilfläche 15 liegende Bereiche sind dabei in einer anderen Farbe dargestellt als außerhalb der Teilfläche 15 liegende Bereiche, welche beispielsweise rot dargestellt sein können. Selbstverständlich sind auch andere Farben bzw. Farbkombinationen denkbar.

## Patentansprüche

1. Verfahren zur Ermittlung einer die Restreichweite eines Kraftfahrzeugs (1), umfassend ein Energiespeichersystem (3) zur Versorgung eines auf wenigstens ein Rad des Kraftfahrzeugs (1) wirkenden Antriebs (2), beschreibenden Teilfläche (15) einer durch Merkmale beschriebenen Karte (13), wobei die Restreichweite in Abhängigkeit einer in dem Energiespeichersystem (3) gespeicherten Energie durch einen von der aktuellen Position (14) des Kraftfahrzeugs (1) ausgehend expandierenden Algorithmus ermittelt wird,
**dadurch gekennzeichnet,**
**dass** eine in gleich große, insbesondere rechteckige geometrische Strukturen aufgeteilte Karte (13) verwendet wird, wobei immer dann, wenn im Rahmen der Expansion ein in einer Struktur liegendes oder einer Struktur entsprechendes Merkmal hinzugefügt wird, die Struktur zu der Teilfläche (15) hinzugefügt wird.

2. Verfahren nach Anspruch 1,
**dadurch gekennzeichnet,**
**dass** als Algorithmus ein Dijkstra-Algorithmus oder ein davon abgeleiteter Algorithmus zur Wegfindung verwendet wird, wobei bei der Kostenfunktion Energiewerte betrachtet werden.

3. Verfahren nach Anspruch 1 oder 2,
**dadurch gekennzeichnet,**
**dass** als Algorithmus ein Flächensegmenten (11) Energiewerte zuordnender, im Rahmen der Expansion die Flächensegmente (11) betrachtender Algorithmus verwendet wird.

4. Verfahren nach Anspruch 3,
**dadurch gekennzeichnet,**
**dass** die geometrischen Strukturen den Flächensegmenten (11) entsprechen.

5. Verfahren nach einem der vorangehenden Ansprüche,
**dadurch gekennzeichnet,**
**dass** der Rand der Teilfläche (15) geglättet wird und/oder von der Teilfläche (15) umschlossene, nicht zu der Teilfläche (15) gehörende Bereiche der Teilfläche (15) hinzugefügt werden.

6. Verfahren nach einem der vorangehenden Ansprüche,
**dadurch gekennzeichnet,**
**dass** die Teilfläche (15) gemeinsam mit der Karte (13) unterscheidbar von nicht der Teilfläche (15) zugehörigen Bereichen der Karte (13) auf einer Anzeigevorrichtung (8) des Kraftfahrzeugs (1) dargestellt wird.

7. Verfahren nach einem der vorangehenden Ansprüche,
**dadurch gekennzeichnet,**
**dass** als das Energiespeichersystem (3) ein einen Kraftstofftank (4) und/oder eine Batterie (5) aufweisendes Energiespeichersystem (3) verwendet wird.

8. Kraftfahrzeug (1) mit einem auf wenigstens ein Rad des Kraftfahrzeugs (1) wirkenden Antrieb (2), einem Energiespeichersystem (3) zur Versorgung des Antriebs (2) und einer zur Durchführung eines Verfahrens nach einem der vorangehenden Ansprüche ausgebildeten Berechnungsvorrichtung (7).

9. Kraftfahrzeug nach Anspruch 9,
**dadurch gekennzeichnet, dass** die Berechnungsvorrichtung (7) Teil eines Navigationssystems (6) ist.

## Claims

1. Method for determining a sub-portion (15) of a map (13) described by features, which sub-portion depicts the remaining range of a motor vehicle (1) comprising an energy storage system (3) for supplying a drive (2) acting on at least one wheel of the motor vehicle (1), the remaining range being determined by an algorithm which expands from the current position (14) of the motor vehicle (1) as a function of energy stored in the energy storage system (3), **characterised in that**
a map (13), which is divided into equal-sized structures, in particular rectangular geometric structures, is used, the structure being added to the sub-portion (15) every time a feature arranged in a structure or corresponding to a structure is added as the algorithm expands.

2. Method according to claim 1, **characterised in that** the algorithm used is Dijkstra's algorithm or a pathfinding algorithm which is derived therefrom, in which energy values are taken into consideration when calculating the cost function.

3. Method according to either claim 1 or claim 2, **characterised in that** the algorithm used is an algorithm which assigns energy values to portion segments (11) and which takes account of the portion segments (11) during expansion.

4. Method according to claim 3, **characterised in that** the geometric structures correspond to the portion segments (11).

5. Method according to any of the preceding claims, **characterised in that** the edge of the sub-portion (15) is smooth and/or regions of the sub-portion (15) which are enclosed by the sub-portion (15) and do not form part of the sub-portion (15) are added.

6. Method according to any of the preceding claims, **characterised in that** the sub-portion (15) together with the map (13) is shown on a display device (8) of the motor vehicle (1) such that said sub-portion is distinguishable from regions of the map (13) which do not form part of the sub-portion (15).

7. Method according to any of the preceding claims, **characterised in that** an energy storage system (3) having a fuel tank (4) and/or a battery (5) is used as the energy storage system (3).

8. Motor vehicle (1) comprising a drive (2) acting on at least one wheel of the motor vehicle (1), an energy storage system (3) for supplying the drive (2) and a calculation device (7) configured to carry out a method according to any of the preceding claims.

9. Motor vehicle according to claim 9, **characterised in that** the calculation device (7) forms part of a navigation system (6).

## Revendications

1. Procédé de détermination d'une surface partielle - décrivant l'autonomie restante d'un véhicule automobile (1) comprenant un système d'accumulation d'énergie (3) pour alimenter un entraînement (2) opérant sur au moins une roue du véhicule automobile (1) - d'une carte (13) décrite par des caractéristiques, dans lequel l'autonomie restante est déterminée en fonction d'une énergie stockée dans le système d'accumulation d'énergie (3) par un algorithme se développant à partir de la position courante (14) du véhicule automobile (1),
**caractérisé en ce que** :
l'on utilise une carte (13) divisée en structures géométriques de même grandeur, en particulier rectangulaires, dans lequel, chaque fois que, dans le cadre du développement, on ajoute une caractéristique située dans une structure ou correspondant à une structure, la structure est ajoutée à la surface partielle (15).

2. Procédé selon la revendication 1,
**caractérisé en ce que** :
l'on utilise comme algorithme un algorithme de Dijkstra ou un algorithme qui en découle pour trouver une route, dans lequel des valeurs d'énergie sont prises en compte dans la fonction de coûts.

3. Procédé selon la revendication 1 ou la revendication 2,
**caractérisé en ce que** :
l'on utilise comme algorithme un algorithme affectant aux valeurs d'énergie des segments de surface (11) et prenant en compte les segments de surface (11) dans le cadre du développement.

4. Procédé selon la revendication 3,
**caractérisé en ce que** :
les structures géométriques correspondent aux segments de surface (11).

5. Procédé selon l'une quelconque des revendications précédentes,
**caractérisé en ce que** :
le bord de la surface partielle (15) est lissé et/ou des zones entourées par la surface partielle (15) et n'appartenant pas à la zone partielle (15) sont ajoutées à la zone partielle (15).

6. Procédé selon l'une quelconque des revendications précédentes,
**caractérisé en ce que** :
la surface partielle (15) est représentée conjointement avec la carte (13) différemment des zones de la carte (13) n'appartenant pas à la surface partielle (15) sur un dispositif d'affichage (8) du véhicule automobile (1).

7. Procédé selon l'une quelconque des revendications précédentes,
**caractérisé en ce que** :
l'on utilise comme système d'accumulation d'énergie (3) un système d'accumulation d'énergie (3) présentant un réservoir de carburant (4) et/ou une batterie (5).

8. Véhicule automobile (1) comprenant un entraînement (2) opérant sur au moins une roue du véhicule automobile (1), un système d'accumulation d'énergie (3) pour alimenter l'entraînement (2) et un dispositif de calcul (7) conçu pour réaliser un procédé selon l'une quelconque des revendications précédentes.

9. Véhicule automobile selon la revendication 9, car
actérisé en ce que le dispositif de calcul (7) fait partie d'un système de navigation (6).
